Europäisches Patentamt

European Patent Office

Office européen des brevets

(19)

(11) Numéro de publication: **0 128 801**
**B1**

(12) **FASCICULE DE BREVET EUROPEEN**

(45) Date de publication du fascicule du brevet: **18.05.88**

(51) Int. Cl.⁴: **G 21 C 13/02,** F 17 C 13/08

(21) Numéro de dépôt: **84401065.2**

(22) Date de dépôt: **23.05.84**

(54) Dispositif de supportage d'une structure sur un socle support.

(30) Priorité: **26.05.83 FR 8308733**

(43) Date de publication de la demande:
**19.12.84 Bulletin 84/51**

(45) Mention de la délivrance du brevet:
**18.05.88 Bulletin 88/20**

(84) Etats contractants désignés:
**BE DE GB IT**

(56) Documents cités:
FR-A-1 200 391
FR-A-1 210 341
FR-A-1 375 835
FR-A-2 325 290
FR-A-2 386 652
FR-A-2 488 313

(73) Titulaire: **COMMISSARIAT A L'ENERGIE ATOMIQUE**
**31/33, rue de la Fédération**
**F-75015 Paris (FR)**

(73) Titulaire: **ELECTRICITE DE FRANCE Service National**
**2, rue Louis Murat**
**F-75008 Paris (FR)**

(72) Inventeur: **Arene, Gilbert**
**"Le Clos Vert" Route de la Loubière**
**F-84120 Pertuis (FR)**
Inventeur: **Renaux, Charley**
**Les Extrées**
**F-13490 Jouques (FR)**
Inventeur: **Minguet, Jean-Luc**
**3, Jardin des Tilleuls**
**F-91190 Saint Aubin (FR)**
Inventeur: **Chantot, Hubert**
**10-12, rue de Reims**
**F-75013 Paris (FR)**

(74) Mandataire: **Mongrédien, André et al**
**c/o BREVATOME 25, rue de Ponthieu**
**F-75008 Paris (FR)**

Courier Press, Leamington Spa, England.

EP 0 128 801 B1

# Description

La présente invention se rapporte à un dispositif de supportage d'une structure sur un socle support.

A titre d'exemple, ce dispositif peut être appliqué au supportage de la cuve de sécurité d'un réacteur nucléaire, sur un socle en béton. On peut aussi utiliser ce dispositif pour supporter la cuve principale du réacteur, en s'appuyant sur la cuve de sécurité qui peut être elle-même supportée par le dispositif objet de l'invention : on réalise alors un double supportage en série.

Dans un autre mode de réalisation, la cuve de sécurité peut être plaquée sur le socle en béton, et la cuve principale supportée par le dispositif objet de l'invention.

Toutefois, l'invention n'est pas limitée à cette application et peut être utilisée dans tous les cas où une structure, présentant de préférence mais non impérativement une symétrie de révolution, doit être supportée par une socle en remplissant les conditions de souplesse radiale et de rigidité transversale de façon à résister aux effets d'un séisme éventuel et à pouvoir encaisser les variations brutales de température.

Sans quitter le domaine technique des réacteurs nucléaires à neutrons rapides, on peut notamment envisager une autre application d'un tel dispositif pour assurer le supportage du sommier d'alimentation du coeur du réacteur sur le fond de la cuve du réacteur, qui constitue alors le socle support.

L'invention a précisément pour objet un dispositif de supportage d'une structure sur un socle support, conçu de manière à être "radialement souple" pour permettre les dilatations différentielles entre la structure et le socle sans contrainte mécanique excessive, tout en présentant une bonne rigidité transversale afin de ne pas trop se déformer lorsque la structure supportée est soumise à un effort horizontal par rapport au socle support part exemple sous l'effet d'un séisme.

A cet effet et conformément à l'invention, il est proposé un dispositif de supportage d'une structure sur un socle support, caractérisé en ce qu'il comprend deux séries de lames disposées l'une au-dessus de l'autre, de manière à être solidarisées respectivement du socle support et de ladite structure, chaque série de lames définissant une enveloppe convexe fermée et étant constituée de lames souples selon une direction radiale par rapport à ladite enveloppe, les deux séries de lames souples étant reliées par un treillis de barres rigides comprenant des barres inclinées selon deux directions différentes dans le sens circonférentiel défini par lesdites enveloppes.

Le document EP—A1—0 127 540, beneficiant de la même date, décrit et revendique un dispositif par lequel une structure est suspendue à une autre, ce dispositif ayant la même structure que le dispositif de supportage selon l'invention.

De préférence, le dispositif de supportage selon l'invention comprend de plus un anneau de base reposant sur le socle et portant l'une des séries de lames souples, et un anneau support sur lequel repose ladite structure et portant l'autre série de lames souples. Les lames souples peuvent alors être soit fixées aux anneaux, par exemple par soudure ou par encastrement, soit découpées dans la masse même des anneaux.

Conformément à un mode de réalisation particulier de l'invention, les enveloppes définies par chaque série de lames sont circulaires, coaxiales et, de préférence, sensiblement de même diamètre.

Selon deux modes de réalisation de l'invention, les barres rigides constituant le treillis reliant les lames souples peuvent être soit disposées en V juxtaposés, soit disposées en X juxtaposés.

L'invention peut s'appliquer, par exemple, à un réacteur nucléaire à neutrons rapides du type comprenant une cuve d'axe vertical remplie de métal liquide, obturée par une dalle et contenant le coeur du réacteur, caractérisé en ce que ladite cuve repose sur un socle support par l'intermédiaire d'un dispositif de supportage du type défini précédemment.

On décrira maintenant, à titre d'exemple non limitatif, différentes variantes de réalisation de l'invention en se référant aux dessins annexés dans lesquels:

— les figures 1a et 1b sont des vues en perspective représentant de façon schématique deux modes de réalisation du dispositif de supportage selon l'invention;

— les figures 2a et 2b sont des vues fragmentaires en perspective et à plus grande échelle illustrant, dans le cas du mode de réalisation de la figure 1a, deux variantes de réalisation possibles du dispositif de supportage selon l'invention, également applicables au mode de réalisation de la figure 1b;

— la figure 3 est une vue en coupe transversale schematique d'un réacteur nucléaire à neutrons rapides dont la cuve principale repose sur un socle support par l'intermédiaire du dispositif de supportage selon l'invention;

— la figure 4a est une vue extérieure, à plus grande échelle, du dispositif de supportage utilisé dans le réacteur de la figure 3; et

— la figure 4b est une vue partielle en coupe, du dispositif de supportage représenté sur la figure 4a.

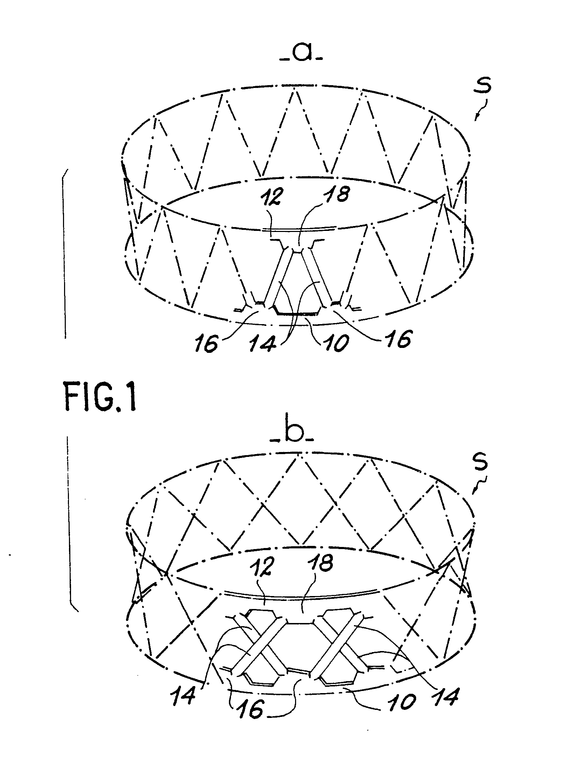

Comme l'illustrent les figures 1a et 1b, le dispositif de supportage S selon l'invention comprend un anneau de base 10 prévu pour reposer directement sur un socle support, un anneau support 12 sur lequel vient en appui la structure à supporter et un treillis de barres rigides 14 raccordées aux anneaux 10 et 12 par des lames souples 16 et 18 respectivement.

Les anneaux 10 et 12 sont des anneaux métalliques circulaires, disposés coaxialement l'un au-dessus de l'autre. De préférence, ils ont sensiblement le même diamètre. Toutefois, lorsque la structure à supporter comporte un fond bombé au niveau de son appui sur l'anneau 12, celui-ci peut présenter un diamètre réduit par rapport au diamètre de l'anneau 10 et l'enveloppe des barres 14 définit alors un tronc de cône.

On remarquera que les anneaux 10 et 12 ne sont pas indispensables à la réalisation de l'invention. En effet, les deux séries de lames 16 et 18 peuvent être fixées directement, d'une part, au socle support et, d'autre part, à la structure à supporter.

D'une manière générale, les anneaux 10 et 12 on en leur absence, les enveloppes des lames 16 et 18, peuvent présenter une forme convexe et fermée différente d'un cercle, notamment lorsque le fond de la structure à supporter est plat. Cette forme peut par exemple être polygonale, ovale, etc...

Les barres 14 sont des barres métalliques rigides et rectilignes, réalisées notamment en profilé résistant bien au flambage et présentant une section en H, en croix, ronde ou tubulaire.

Les barres rigides 14 du dispositif de supportage selon l'invention sont disposées de manière à conférer à ce dispositif une bonne rigidité circonférentielle et, par conséquent, transversale. A cet effet, les barres 14 sont régulièrement réparties entre les anneaux et elles sont inclinées pour moitié dans un sens et pour moitié en sens inverse dans la direction circonférentielle définie par les anneaux 10 et 12. De façon plus précise, dans le mode de réalisation de la figure 1a, les barres rigides 14 sont disposées en V juxtaposés entre les anneaux 10 et 12 alors que, dans le mode de réalisation de la figure 1b, elles sont disposées en X juxtaposés entre ces mêmes anneaux.

Les lames souples 16 et 18 par lesquelles les barres 14 sont accrochées respectivement aux anneaux 10 et 12 sont réalisées conformément à l'invention de façon à présenter une certaine souplesse dans une direction radiale par rapport aux anneaux, tout en conférant une bonne rigidité circonférentielle au dispositif.

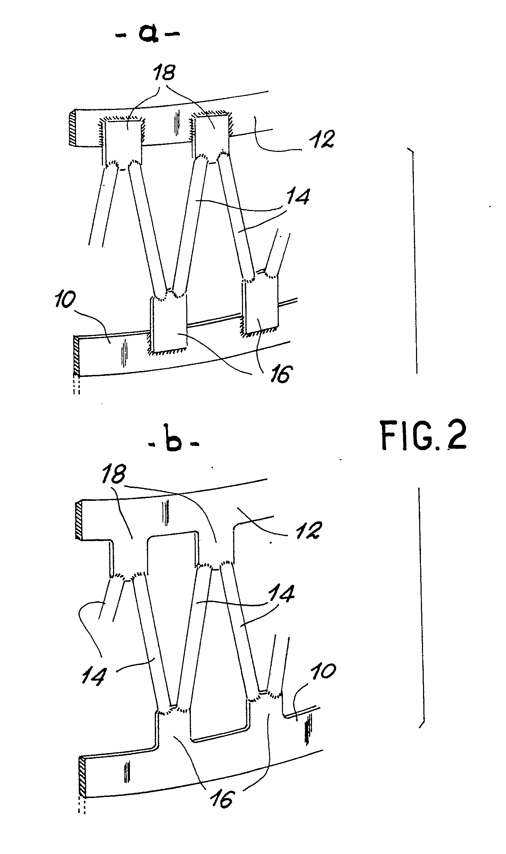

A cet effet et comme l'illustrent les figures 2a et 2b, différentes variantes de réalisation de l'invention peuvent être envisagées. Bien que les figures 2a et 2b illustrent ces variantes de réalisation dans le cas où les barres rigides 14 sont disposées en V conformément au mode de réalisation de la figure 1a, on comprendra que ces variantes peuvent s'appliquer indifféremment au mode de réalisation de la figure 1b.

Sur la figure 2a, on a représenté le cas où les lames souples 16 et 18 sont distinctes des anneaux 10 et 12 respectivement. Dans ce cas, les lames 16 et 18 peuvent être fixées aux anneaux qui leur correspondent, par exemple par soudre ou par encastrement.

Sur la figure 2b, on a représenté le cas où les lames flexibles 16 et 18 sont découpées dans la masse de la tôle consituant les anneaux 10 et 12 respectivement.

Dans les deux cas, on voit sur les figures 2a et 2b que la fixation des barres rigides 14 sur les lames souples 16 et 18 peut être réalisée par tout moyen approprié, et notamment par soudage.

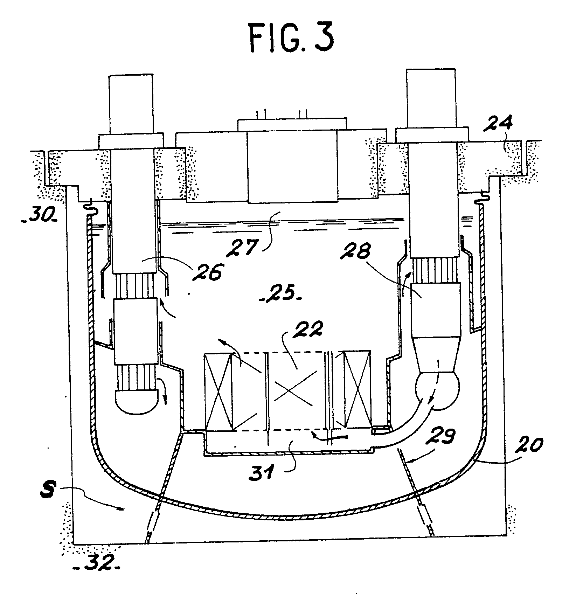

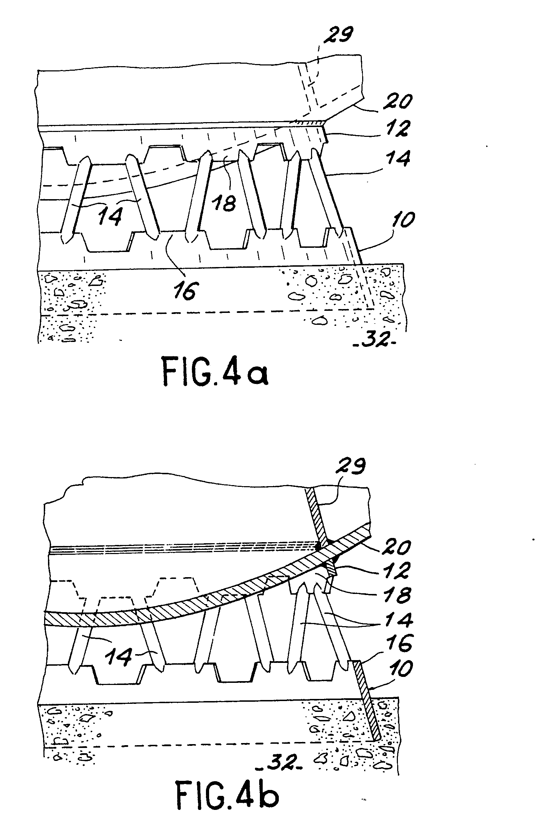

Comme l'illustrent les figures 3, 4a et 4b, la structure de supportage dont différentes variantes de réalisation viennent d'être décrites est particulièrement adaptée au supportage de la cuve principale d'un réacteur nucléaire à neutrons rapides.

Ainsi, on a représenté sur la figure 3 la cuve principale 20, d'axe vertical, d'un réacteur à neutrons rapides de type intégré.

Rappelons que, dans ce type de réacteur, le coeur 22 du réacteur ainsi que l'ensemble du circuit primaire sont disposées à l'intérieur de la cuve 20, qui est obturée à son extrémité supérieure par une dalle de fermeture 24. De façon plus précise, la cuve 20 est remplie d'un métal liquide 25 tel que du sodium assurant le transfert de la chaleur dégagée dans le coeur 22 du réacteur jusqu'à des échangeurs de chaleur 26, sous l'action de pompes de circulation 28. Le sodium liquide 25 est surmonté d'une atmosphère de gaz neutre 27 tel que de l'argon. Le coeur 22 du réacteur repose sur le fond de la cuve 20 par l'intermédiaire d'un platelage 29 et d'un sommier d'alimentation 31.

La cuve principale 20, ainsi qu'une cuve de sécurité (non représentée) entourant la cuve principale sont disposées à l'intérieur d'une enceinte de protection en béton 30 dont le fond 32 constitue conformément à l'invention un socle support pour la cuve principale 20 du réacteur.

Comme l'illustre la figure 3, le fond bombé de la cuve principale 20 repose sur le fond plat horizontal 32 de l'enceinte de béton par l'intermédiaire d'un dispositif de supportage S dont les anneaux 10 et 12 sont disposés coaxialement à l'axe vertical de la cuve 20. De façon plus précise, on voit sur les figures 4a et 4b que l'anneau de base 10 est scellé dans le fond 32 de l'enceinte de béton, alors que l'anneau support 12 est soudé à la cuve principale 20 du réacteur, de préférence dans le prolongement du raccordement du platelage 29 assurant le supportage du coeur du réacteur, sur le fond de la cuve principale 20. De plus, les barres rigides 14 et les anneaux 10 et 12 du dispositif de supportage S définissent une enveloppe tronconique disposée dans le prolongement du platelage 29, de façon à assurer de manière aussi efficace que possible, au travers de la cuve principale 20, le supportage du coeur 22, de son sommier d'alimentation 31 et du platelage 29.

Bien entendu, les différentes variantes de réalisation du dispositif de supportage S décrites précédemment en se référant aux figures 1a, 1b, 2a et 2b sont applicables au supportage de la cuve principale d'un réacteur à neutrons rapides tel que représenté sur la figure 3.

Grâce au treillis de barres rigides 14 reliant les anneaux 10 et 12 et à la présence des lames souples 16 et 18 dans une direction radiale, il est clair que le dispositif S selon l'invention présente les caractéristiques souhaitées.

Ainsi, lorsque, par suite de différences de températures, la structure supportée par le dispositif S, telle que la cuve 20 sur la figure 3, se dilate par rapport à son socle support, tel que le fond 32 de l'enceinte 30 sur la figure 3, le treillis formé par les barres rigides 14 s'évase par déformation des lames souples 16 et 18. Les contraintes mécaniques résultant de ces dilatations différentielles sont ainsi maintenues dans des limites raisonnables.

En revanche, lorsque l'ensemble de la structure supportée par le dispositif S, telle que la cuve 20 sur la figure 2, est soumis à un effort horizontal notamment sous l'effet d'un séisme, la structure du treillis formée par les barres 14 ainsi que la bonne rigidité des lames 16 et 18 dans les sens circonférentiel permettent au dispositif de supportage S selon l'invention de très bien résister à cette sollicitation transversale.

Bien entendu et comme on l'a déjà mentionné précédemment, le dispositif de supportage selon l'invention n'est pas limité à l'application décrite en se référant à la figure 3 mais peut être utilisé dans tous les cas où il peut se produire une déformation radiale entre la structure supportée et son socle support et où une bonne résistance à un effort horizontal est requise.

## Revendications

1. Dispositif de supportage d'une structure (20) sur un socle support (32), caractérisé en ce qu'il comprend deux séries de lames (16, 18) disposées l'une au-dessus de l'autre, de manière à être solidarisées respectivement au socle support (32) et à ladite structure (20), chaque série de lames définissant une enveloppe convexe fermée et étant constituée de lames souples selon une direction radiale par rapport à ladite enveloppe, les deux séries de lames souples (16, 18) étant reliées par un treillis de barres rigides (14) comprenant des barres inclinées selon deux directions différentes dans le sens circonférentiel défini par lesdites enveloppes.

2. Dispositif selon la revendication 1, caractérisé en ce qu'il comprend de plus un anneau de base (10) reposant sur le socle (32) et portant l'une (16) des séries de lames souples, et un anneau support (12) sur lequel repose ladite structure (20) et portant l'autre série de lames souples (18).

3. Dispositif selon l'une quelconque des revendications 1 et 2, caractérisé en ce que les lames souples (16, 18) sont fixées aux anneaux (10, 12).

4. Dispositif selon l'une quelconque des revendications 1 et 2, caractérisé en ce que les lames souples (16, 18) sont découpées dans la masse des anneaux (10, 12).

5. Dispositif selon l'une quelconque des revendications 1 à 4, caractérisé en ce que les enveloppes définies par chaque série de lames (16, 18) sont circulaires et coaxiales.

6. Dispositif selon la revendication 5, caractérisé en ce que les enveloppes circulaires définies par chaque série de lames (16, 18) sont sensiblement de même diamètre.

7. Dispositif selon l'une quelconque des revendications 1 à 6, caractérisé en ce que les barres rigides (14) sont disposées en V juxtaposés.

8. Dispositif selon l'une quelconque des revendications 1 à 6, caractérisé en ce que les barres rigides (14) sont disposées en X juxtaposés.

9. Réacteure nucléaire à neutrons rapides du type comprenant une cuve (20) d'axe vertical remplie de métal liquide, obturée par une dalle (20), et contenant le coeur (22) du réacteur, caractérisé en ce que ladite cuve (20) repose sur un socle support (32) par l'intermédiaire d'un dispositif de supportage (S) selon l'une quelconque des revendications 1 à 6.

## Patentansprüche

1. Einrichtung zur Unterstützung einer Struktur (20) auf einer Sockelstütze (32), dadurch gekennzeichnet, daß sie zwei Reihen von Platten (16,18) aufweist, die übereinander derart angeordnet sind, daß sie mit der Sockelstütze (32) bzw. mit der Struktur (20) fest verbunden sind, wobei jede Reihe von Platten eine geschlossene, konvexe Umhüllung festlegt und von in einer radialen Richtung in Bezug auf die genannte Umhüllung nachgiebigen Platten gebildet ist, die zwei Reihen von nachgiebigen Platten (16,18) durch ein Gitter von steifen Stangen (14) verbunden sind, die Stangen umfassen, die in dem von den genannten Umhüllungen festgelegten Umfangssinn in zwei unterschiedlichen Richtungen geneigt sind.

2. Einrichtung nach Anspruch 1, dadurch gekennzeichnet, daß sie ferner einen Basisring (10), der auf dem Sockel (32) ruht und eine (16) der Reihen von nachgiebigen Platten trägt, und einen Stützring (12) aufweist, auf dem die genannte Struktur (20) ruht und der die andere Reihe von nachgiebigen Platten (18) trägt.

3. Einrichtung nach Anspruch 1 oder 2, dadurch gekennzeichnet, daß die nachgiebigen Platten (16, 18) an den Ringen (10, 12) befestigt sind.

4. Einrichtung nach Anspruch 1 oder 2, dadurch gekennzeichnett, daß die nachgiebigen Platten (16, 18) aus der Gesamtheit der Ringe (10, 12) ausgeschnitten sind.

5. Einrichtung nach einem der Ansprüche 1 bis 4, dadurch gekennzeichnet, daß die von jeder Reihe von Platten (16, 18) festgelegten Umhüllungen kreisförmig und koaxial sind.

6. Einrichtung nach Anspruch 5, dadurch gekennzeichnet, daß die von jeder Reihe von Platten (16, 18) festgelegten, kreisförmigen Umhüllungen im wesentlichen den gleichen Durchmesser aufweisen.

7. Einrichtung nach einem der Ansprüche 1 bis 6, dadurch gekennzeichnet, daß die steifen Stangen (14) als nebeneinander angeordnete V angeordnet sind.

8. Einrichtung nach einem der Ansprüche 1 bis 6, dadurch gekennzeichnet, daß die steifen Stangen (14) als nebeneinander angeordnete X angeordnet sind.

9. Schneller Kernreaktor von der Art, welcher einen mit Flüssigmetall gefüllten Behälter (20) mit vertikaler Achse aufweist, der mit einer Decke (20) abgeschlossen ist und den Reaktorkern (22) enthält, dadurch gekennzeichnet, daß der genannte Behälter (20) auf einem Stützsockel (32) mittels einer Stützeinrichtung (S) gemäß einem der Ansprüche 1 bis 6 ruht.

## Claims

1. Device for supporting a structure (20) on a support base (32), characterized in that it comprises two rows of superimposed plates (16, 18), in such a way that they can be respectively joined to the support base (32) and to the said structure (20), each row of plates defining a closed convex envelope and being constituted by flexible plates in a direction radial with respect to said envelope, the two rows of flexible plates (16, 18) being connected by a lattice of rigid bars (14) incorporating bars sloping in two different directions in the circumferential sense defined by said envelopes.

2. Device according to claim 1, characterized in that it also comprises a base ring (10) resting on the base (32) and carrying one (16) of the rows of flexible plates and a support ring (12) on which said structure (20) rests and which carries the other row of flexible plates (18).

Device according to either of the claims 1 and 2, characterized in that the flexible plates (16, 18) are fixed to the rings (10, 12).

4. Device according to either of the claims 1 and 2, characterized in that the flexible plates (16, 18) are cut from the mass of the rings (10, 12).

5. Device according to any one of the claims 1 to 4, characterized in that the envelopes defined by each row of plates (16, 18) are circular and coaxial.

6. Device according to claim 5, characterized in that the circular envelopes defined by each row of plates (16, 18) are substantially of the same diameter.

7. Device according to any one of the claims 1 to 6, characterized in that the rigid bars (14) are arranged in juxtaposed V form.

8. Device according to any one of the claims 1 to 6, characterized in that the rigid bars (14) are arranged in juxtaposed X form.

9. Fast neutron nuclear reactor of the type comprising a vertically axed vessel (20) filled with liquid metal, closed by a slab (20) and containing the reactor core (22), characterized in that the said vessel rests on a support base (32) via a supporting device (S) according to any one of the claims 1 to 6.

_a_

S

12   18

16   14   10   16

# FIG.1

_b_

S

12   18

14   16   10   14

- a -

18

12

14

10

16

- b -

18

12

14

14

10

16

FIG. 2

# FIG. 3

FIG.4a

FIG.4b